# EUROPÄISCHE PATENTANMELDUNG

(11) **EP 1 950 445 A2**
(43) Veröffentlichungstag der Anmeldung: **30.07.2008**
(21) Anmeldenummer: 08000757.8
(22) Anmeldetag: 16.01.2008
(51) Int. Cl.: F16D 25/08

(54) **Kupplungsanordnung**

(30) Priorität: 23.01.2007 DE 102007003442
(71) Anmelder: ZF FRIEDRICHSHAFEN AG, 88038 Friedrichshafen (DE)
(72) Erfinder: Greubel, Marco, 97714 Oerlenbach (DE); Snima, Khalid Abu, Dr., 97421 Schweinfurt (DE)

(57) **Zusammenfassung**

Eine Kopplungsanordnung zur wahlweisen Drehkopplung einer Eingangswelle, insbesondere eines Kompressors in einem Fahrzeug, mit einem Antriebsorgan, insbesondere Antriebsrad, umfasst einen mit dem Antriebsrad (12) zur gemeinsamen Drehung um eine Drehachse (A) gekoppelten oder zu koppelnden ersten Reibelemententräger (18), mit welchem die Reibelemente (26) einer ersten Gruppe (28) von Reibelementen drehfest gekoppelt sind, einen mit der Eingangswelle (14) zur gemeinsamen Drehung um die Drehachse (A) gekoppelten oder zu koppelnden zweiten Reibelemententräger (30), mit welchem die Reibelemente (50) einer zweiten Gruppe (52) von Reibelementen drehfest gekoppelt sind, an einer in Richtung von einem freien Ende (34) der Eingangswelle (14) weg weisenden ersten axialen Seite der beiden Gruppen (28, 52) von Reibelementen eine bezüglich des zweiten Reibelemententrägers (30) axial abgestützte Widerlagerplatte (54), an einer in Richtung freies Ende (34) der Eingangswelle (14)weisenden zweiten axialen Seite der beiden Gruppen (28, 52) von Reibelementen (26, 50) eine durch einen Kraftspeicher (58) in Richtung auf die Reibelemente (26, 50) zu beaufschlagte Anpressplatte (56), eine Betätigungskrafterzeugungsanordnung (100) zur Erzeugung einer Betätigungskraft für den Kraftspeicher (58), wobei die Betätigungskrafterzeugungsanordnung (100) mit dem zweiten Reibelemententräger (30) zur Reaktionskraftabstützung axial gekoppelt ist.

## Beschreibung

Die vorliegende Erfindung betrifft eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte.

Aus der DE 80 21 411 U1 ist eine Kopplungsanordnung bekannt, über welche eine Eingangswelle eines in einem Fahrzeug vorzusehenden Kompressors zur Erzeugung von Druckluft mit einem Antriebsrad wahlweise zur gemeinsamen Drehung gekoppelt werden kann. Im Kopplungszustand kann über das von einem Antriebsaggregat zur Drehung angetriebene Antriebsrad und die Kopplungsanordnung dann auch die Eingangswelle des Kompressors zur Drehung angetrieben werden, um den Kompressor zu Betreiben.

Bei dieser bekannten Kopplungsanordnung umfasst der Kraftspeicher eine bzw. mehrere in Umfangsrichtung um eine Drehachse verteilte und in Achsrichtung wirkende Schraubendruckfedern. Diese stützen sich über einen Abstützring axial bezüglich des zweiten Reibelemententrägers ab und stützen sich über Abstütztöpfe axial an der Anpressplatte ab. Durch ihren vorgespannten Einbau pressen somit diese Schraubendruckfedern die Anpressplatte in Richtung auf die Widerlagerplatte zu, so dass zwischen der Anpressplatte und der Widerlagerplatte die alternierend angeordneten Reibelemente der beiden Gruppen von Reibelementen eingespannt werden und ein Drehmoment übertragen werden kann.

Um diese Kopplungsanordnung in einen Ausrückzustand zu bringen, also die Drehmomentübertragungsverbindung zwischen dem Antriebsrad und der Eingangswelle des Kompressors zu unterbinden, wirkt eine als Betätigungskrafterzeugungsanordnung wirksame Zylinder/Kolben-Einheit auf ein Drehentkopplungslager ein. Das Drehentkopplungslager wiederum belastet mehrere als Betätigungskraftübertragungsorgane wirksame Bolzen, welche die Widerlagerplatte und die Reibelemente der zweiten Gruppe von Reibelementen axial durchgreifen und mit der Anpressplatte axial fest gekoppelt sind. Somit kann entgegen der Vorspannwirkung der Schraubendruckfedern die Anpressplatte axial in Richtung von der Widerlagerplatte weg verschoben werden, wenn in einen Zylinderraum der Zylinder/Kolben-Einheit Druckfluid, im Allgemeinen Druckluft, eingeleitet wird und somit eine Kolbenbaugruppe der Zylinder/Kolben-Einheit das Drehentkopplungslager und somit die mit der Anpressplatte fest gekoppelten Bolzen axial verschiebt.

Es ist die Aufgabe der vorliegenden Erfindung, eine Kopplungsanordnung zur wahlweisen Drehkopplung einer Eingansgwelle, insbesondere eines Kompressors in einem Fahrzeug, mit einem Antriebsorgan, insbesondere Antriebsrad, vorzusehen, bei welcher eine Entlastung der Lagerung der Eingangswelle erreicht werden kann.

Erfindungsgemäß wird diese Aufgabe gelöst durch eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte, eine Betätigungskrafterzeugungsanordnung zur Erzeugung einer Betätigungskraft für den Kraftspeicher, wobei die Betätigungskrafterzeugungsanordnung mit dem zweiten Reibelemententräger zur Reaktionskraftabstützung axial gekoppelt ist.

Durch die axiale Kopplung bzw. Abstützung der Betätigungskrafterzeugungsanordnung bezüglich des zweiten Reibelemententrägers wird auch dann, wenn dieser zur Durchführung von Ausrückvorgängen zu betätigen ist, also eine Ausrückkaft in diesen eingeleitet wird, für einen vollständigen Kraftrückschluss innerhalb des Systems Kraftspeicher-Betätigungskrafterzeugungsanordnung gesorgt. Andere Lagerungen, wie z.B. die Axiallagerungen der Eingangswelle, werden also auch dann, wenn durch Erzeugung einer Betätigungskraft die Kopplungsanordnung in einen Ausrückzustand zu bringen ist, nicht belastet.

Beispielsweise kann der Aufbau der erfindungsgemäßen Kopplungsanordnung derart sein, dass die Betätigungskrafterzeugungsanordnung eine Zylinder/Kolben-Einheit umfasst, wobei eine Kolbenbaugruppe der Zylinder/Kolben-Einheit über ein Betätigungskraftübertragungsorgan mit dem Kraftspeicher zu dessen Betätigung zusammenwirkt und wobei eine Zylinderbaugruppe der Zylinder/Kolben-Einheit mit dem zweiten Reibelemententräger axial gekoppelt ist. Dabei kann die Zylinderbaugruppe mit dem zweiten Reibelemententräger drehfest gekoppelt sein.

Da bei dieser Anordnung die Betätigungskrafterzeugungsanordnung zusammen mit dem zweiten Reibelemententräger und somit auch der Eingangswelle rotieren kann, kann weiterhin vorgesehen sein, dass die Kolbenbaugruppe mit dem Betätigungskraftübertragungsorgan ohne Zwischenschaltung eines Drehentkopplungslagers zusammenwirkt.

Der erste Reibelemententräger kann bezüglich des zweiten Reibelemententrägers axial und radial gelagert sein.

Bei einer vor allem hinsichtlich der erforderlichen Betätigungskräfte besonders vorteilhaften Ausgestaltungsform wird vorgeschlagen, dass der Kraftspeicher ringartig ausgebildet ist und in einem radial äußeren Abstützbereich bezüglich des zweiten Reibelemententrägers axial abgestützt ist, in einem radial inneren Betätigungsbereich zur Durchführung von Einrück- und Ausrückvorgängen betätigbar ist und in einem radial zwischen dem Abstützbereich und dem Betätigungsbereich liegenden Beaufschlagungsbereich die Anpressplatte beaufschlagt. Hier ist also der Kraftspeicher bei radialer Betrachtung als einseitig wirkender Hebel ausgestaltet, was insbesondere durch den relativ großen Radialabstand zwischen dem Abstützbereich und dem Betätigungsbereich auch bei vergleichsweise starker Vorspannung des Kraftspeichers nur vergleichsweise geringe Betätigungskräfte erforderlich macht.

Weiterhin kann vorgesehen sein, dass das Betätigungskraftübertragungsorgan in einem an der ersten axialen Seite der beiden Gruppen von Reibelementen liegenden Bereich zur Durchführung von Betätigungsvorgängen mit der Betätigungskrafterzeugungsanordnung zusammenwirkt und in einem an der zweiten axialen Seite der beiden Gruppen von Reibelementen liegenden Bereich mit dem Kraftspeicher zu dessen Betätigung zusammenwirkt. Dabei kann das Betätigungskraftübertragungsorgan mit wenigstens einem Betätigungsabschnitt den zweiten Reibelemententräger axial durchgreifen.

Die vorliegende Erfindung wird nachfolgend mit Bezug auf die beiliegenden Figuren detailliert beschrieben. Es zeigt:
Fig. 1 eine Längsschnittansicht einer erfindungsgemäß aufgebauten Kopplungsanordnung;
Fig. 2 eine perspektivische Ansicht eines bei der Kopplungsanordnung der Fig. 1 eingesetzten Druckrings;
Fig. 3 eine der Fig. 2 entsprechende Darstellung eines alternativ ausgestalteten Druckrings.

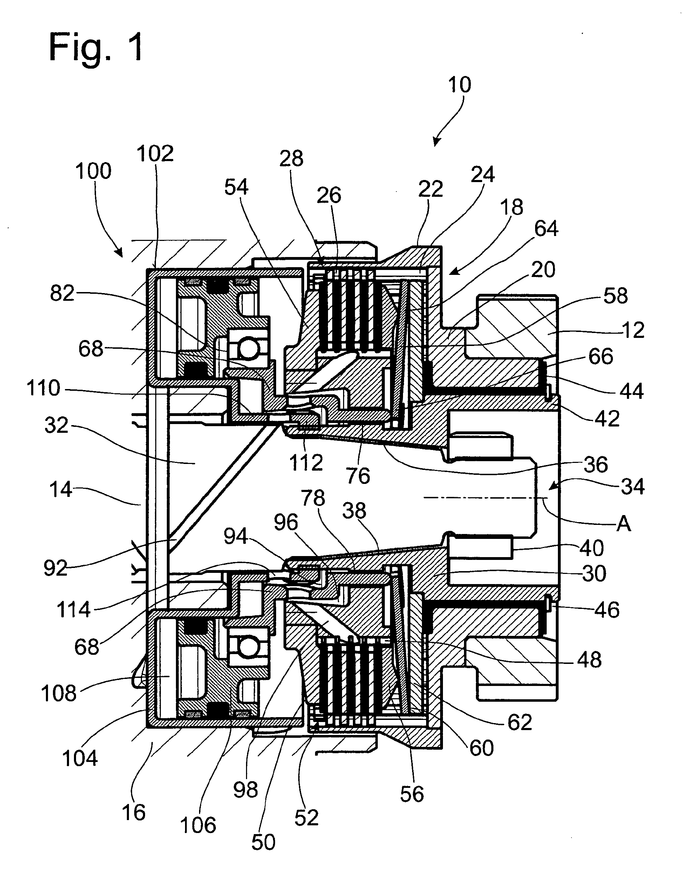

In Fig. 1 ist eine erfindungsgemäß aufgebaute Kopplungsanordnung allgemein mit 10 bezeichnet. Diese Kopplungsanordnung 10 dient dazu, wahlweise eine Drehkopplung zwischen einem beispielsweise als Zahnrad ausgestalteten Antriebsrad 12 und einer Eingangswelle 14 eines Kompressors herzustellen. Ein derartiger Kompressor kann in einem Fahrzeug, beispielsweise Lastkraftwagen, eingesetzt sein, um für verschiedene mit Druckluft zu betreibende Systembereiche die erforderliche Druckluft zu generieren. Dabei ist die Eingangswelle 14, die bei einem derartigen Kompressor als Kurbelwelle ausgebildet sein kann, in einem Gehäuse 16 aufgenommen und darin auch durch nicht dargestellte Lager radial und axial gelagert.

Die Kopplungsanordnung 10 umfasst einen ersten Reibelemententräger 18. Dieser ist zweiteilig aufgebaut und trägt mit einem ersten Teil 20 das Antriebsrad 12. Die Verbindung zwischen diesem ersten Teil 20 des ersten Reibelemententrägers 18 und dem Antriebsrad 12 kann beispielsweise durch Klemmsitz, Verschweißung oder in sonstiger Weise realisiert sein.

Ein radial außen mit dem ersten Teil 20 fest verbundenes zweites Teil 22 des ersten Reibelemententrägers 18 ist im Wesentlichen zylindrisch ausgestaltet und weist an seiner Innenumfangsfläche eine Verzahnung 24 auf, mit welcher die Reibelemente 26 einer ersten Gruppe 28 von Reibelementen mit entsprechenden Verzahnungen in Drehkopplungseingriff stehen, jedoch bezüglich des zweiten Teils 22 bzw. des ersten Reibelemententrägers 18 in Richtung einer Drehachse A bewegbar sind.

Ein zweiter Reibelemententräger 30 ist mit der Eingangswelle 14 drehfest verbunden. Dazu kann die Eingangswelle 14 an ihrem mit dem Antriebsrad 12 zu koppelnden Endbereich 32 einen konisch sich in Richtung zum freien Ende 34 der Eingangswelle 14 verjüngenden Abschnitt 36 aufweisen, auf welchen der zweite Reibelemententräger 30 mit einer entsprechend konisch geformten Innenöffnung 38 aufgesetzt und durch eine Fixiermutter 40 fixiert ist. Auf diese Art und Weise wird ein drehfester Klemmsitz erzeugt. In einem auch über das freie Ende 34 der Eingangswelle 14 sich hinaus erstreckenden Lagerabschnitt 42 des zweiten Reibelemententrägers 30 ist über eine AxiaI/Radial-Lageranordnung 44 der erste Reibelemententräger 18, nämlich dessen erstes Teil 20, axial und radial gelagert. Diese Lageranordnung 44 kann als Gleitlageranordnung ausgebildet sein, die in einer axialen Richtung durch einen Sicherungsring 46 bezüglich des zweiten Reibelemententrägers 30 fixiert ist.

Der zweite Reibelemententräger 30 weist eine Außenverzahung 48 auf, mit welcher die Reibelemente 50 einer zweiten Gruppe 52 von Reibelementen drehfest gekoppelt sind, jedoch bezüglich des zweiten Reibelemententrägers 30 axial bewegbar sind. Man erkennt, dass jeweils Reibelemente 26 der ersten Gruppe 28 von Reibelementen und Reibelemente 50 der zweite Gruppe 52 von Reibelementen einander alternierend abwechseln.

Der zweite Reibelemententräger 30 kann, wie dies in der Fig. 1 auch erkennbar ist, einteilig ausgebildet sein, also an einem Bauteil sowohl die Verzahnung 48 zur Kopplung mit den Reibelementen 50, den sich verjüngenden Abschnitt 36 und den über die Lageranordnung 44 den ersten Reibelemententräger 18 tragenden Abschnitt aufweisen. Es ist selbstverständlich, dass auch der zweite Reibelemententräger 30 aus mehreren Teilen zusammengefügt sein kann, wie dies beim ersten Reibelemententräger 18 der Fall ist.

Mit dem zweiten Reibelemententräger 30 ist ferner eine Widerlagerplatte 54 fest verbunden. Diese ist an einer vom freien Ende 34 abgewandt liegenden axialen Seite der beiden Gruppen 28, 52 von Reibelementen angeordnet und bildet die axiale Abstützung für die Reibelemente 26, 50. An der anderen axialen Seite, also der dem freien Ende 34 der Eingangswelle 14 zugewandt liegenden axialen Seite der beiden Gruppen 28, 52 von Reibelementen, ist eine Anpressplatte 56 angeordnet. Diese kann beispielsweise, ähnlich wie die Reibelemente 50, mit dem zweiten Reibelemententräger 30 drehfest gekoppelt sein, bezüglich diesem jedoch axial bewegbar sein. Ein als Membranfeder oder Tellerfeder ausgestalteter Kraftspeicher 58 beaufschlagt die Anpressplatte 56 in axialer Richtung und presst diese auf die Reibelemente 26, 50 zu. Dadurch werden diese gegeneinander gepresst und somit in Reibeingriff gebracht. Die Abstützkraft liefert, wie bereits erwähnt, die Widerlagerplatte 54.

Der Kraftspeicher 58 ist radial außen in einem Abstützbereich 60 desselben an einem ringartigen Abstützelement 62 axial abgestützt, das radial innen an einer Schulter des zweiten Reibelements 30 abgestützt ist bzw. mit dem zweiten Reibelemententräger 30 fest gekoppelt ist. Durch das Abstützelement 62 ist gleichzeitig auch eine Arretierung der Lageranordnung 44 in der anderen axialen Richtung realisiert.

In einem radial weiter innen liegenden Beaufschlagungsbereich 64 beaufschlagt der Kraftspeicher 58 die Anpressplatte 56 und presst diese somit gegen die Reibelemente 26, 50. In seinem radial inneren Endbereich weist der ringartig ausgestaltete Kraftspeicher 58 einen Betätigungsbereich 66 auf, in welchem dieser durch einen als Betätigungskraftübertragungsorgan wirksamen Druckring 68 betätigt bzw. eine Ausrückkraft in diesen eingeleitet werden kann.

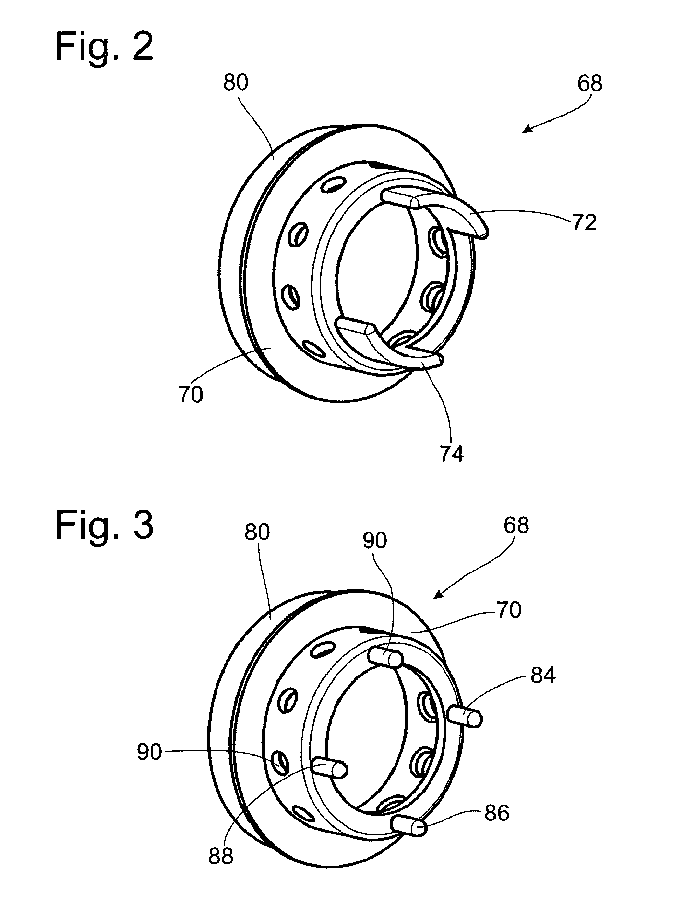

Ein Beispiel eines derartigen Druckrings 68 ist in Fig. 2 gezeigt. Dieser weist einen ringartigen Körperbereich 70 auf, von welchem zwei ringsegmentartige Betätigungsabschnitte 72, 74 sich axial weg erstrecken. Diese durchgreifen Öffnungen 76 bzw. 78 im zweiten Reibelemententräger 30. Mit seinem an der dem freien Ende 34 zugewandten axialen Seite der beiden Gruppen 28, 52 von Reibelementen liegenden Bereich, also einem jeweiligen axialen Endbereich der Betätigungsabschnitte 72, 74, belastet der Druckring 68 den Betätigungsbereich 66 des Kraftspeichers 58. In seinem anderen axialen Endbereich weist der Druckring 68 einen Lagerungsabschnitt 80 auf, in welchem dieser an einem in Fig. 1 erkennbaren Drehentkopplungslager 82 axial bzw. auch radial abgestützt ist.

Es sei hier noch auf die Fig. 3 verwiesen, welche eine alternative Ausgestaltungsform eines derartigen Druckrings 68 zeigt. Hier gehen vom ringartigen Körperabschnitt 70 vier in gleichmäßigem Umfangsabstand zueinander angeordnete Bolzen 84, 86, 88, 90 aus, welche entsprechende Öffnungen im zweiten Reibelemententräger 30 durchsetzen und auf den Betätigungsbereich 66 des Kraftspeichers 58 einwirken.

Man erkennt weiterhin, dass in dem ringartigen Körperabschnitt 70 des Druckrings 68 Öffnungen 90 gebildet sind. Schmierfluid, welches durch einen in der Eingangswelle 14 ausgebildeten Schmierfluidkanal 92 in ein durch den Druckring 68 nach radial außen begrenztes erstes Schmierfluidreservoir 94 gelangt, kann durch diese Öffnungen 90 hindurch in ein durch den zweiten Reibelemententräger 30 nach radial außen begrenztes zweites Schmierfluidreservoir 96 gelangen und von dort durch Öffnungen 98 in den Bereich der Reibelemente 26, 50.

Eine allgemein mit 100 bezeichnete Betätigungskrafterzeugungsanordnung umfasst eine Zylinder/Kolben-Einheit 102 mit einer Zylinderbaugruppe 104 und einer Kolbenbaugruppe 106. Die Zylinder/Kolben-Einheit 102 ist ringartig und die Eingangswelle 14 umgebend aufgebaut und weist eine ringartige Zylinderkammer 108 auf, in welche ein Druckfluid, also beispielsweise Druckluft, eingespeist werden kann. Die Kolbenbaugruppe 106, welche fluiddicht in der Zylinderbaugruppe 104 axial verschiebbar aufgenommen ist, wirkt über das Drehentkopplungslager 82 mit dem Druckring 68 zusammen. Bei Einleitung von Druckfluid in die Zylinderkammer 108 wird die Kolbenbaugruppe 106 axial verschoben. Über das Drehentkopplungslager 82 wird somit auch der Druckring 68 axial in der Darstellung der Fig. 1 nach rechts, also in Richtung auf den Kraftspeicher 58 zu, verschoben. Dabei belasten die Betätigungsabschnitte 72, 74 den Betätigungsbereich 66 des Kraftspeichers 58 und schieben diesen in Richtung auf das freie Ende 34 zu. Entsprechend bewegt sich auch durch die Abstützung radial ganz außen der Beaufschlagungsbereich 64 in Richtung von der Widerlagerplatte 54 weg, so dass die Beaufschlagung der Anpressplatte 56 gemindert bzw. aufgehoben wird. Dies hat zur Folge, dass auch der Reibeingriff der Reibelemente 26, 52 entsprechend gemindert wird und somit die Kopplungsanordnung 10 in einen Ausrückzustand gebracht werden kann.

Auf Grund der Ausgestaltung des Kraftspeichers 58 als einseitig wirkender Hebel werden sehr günstige Kratftverhätnisse erhalten. Einerseits ist es möglich, den Kraftspeicher 58 sehr stark vorgespannt einzubauen, so dass der näher am Abstützbereich 60 als am Betätigungsbereich 66 liegende Beaufschlagungsbereich 64 eine entsprechend starke Einrückkraft auf die Anpressplatte 56 ausübt. Da für die Betätigung zum Ausrücken eine sehr große Hebellänge realisiert ist, kann auch bei stark vorgespanntem Einbau bzw. entsprechend starker Einrückkraft mit vergleichsweise geringer Ausrückkraft gearbeitet werden. Dies führt zu einer deutlich geringeren Belastung der Betätigungskrafterzeugungsanordnung 100 zur Erzeugung der Betätigungskraft und ermöglicht einen entsprechend einfachen Aufbau. Ferner wird es möglich, durch die erzielbare große Einrückkraft bei vergleichsweise geringer erforderlicher Ausrückkraft die erforderlichen Drehmomente auch mit geringerer Anzahl an Reibflächen, also geringerer Anzahl an Reibelementen, zu übertragen, was zu einer kompakten Bauweise beiträgt. Die niedrigere Ausrückkraft führt weiterhin zu einer besseren Steuerbarkeit der Ausrückvorgänge.

Ein weiterer Vorteil der geringeren Betätigungskraft bzw. Ausrückkraft ist, dass das zwischen dem Druckring 68 und der Kolbenbaugruppe 106 wirkende Drehentkopplungslager 82 auch nur weniger stark axial belastet wird und überdies nur dann belastet wird, wenn Ausrückvorgänge durchzuführen sind. Dies hat zur Folge, dass dieses Drehentkopplungslager 82 nicht notwendigerweise als Wälzkörperlager ausgebildet sein muss, wie es in der Fig. 1 gezeigt ist, sondern beispielsweise auch als Gleitlager mit einer Anlaufscheibe ausgebildet sein kann, was zu einer geringeren axialen Baugröße führt.

Man erkennt in der Fig. 1, dass die Zylinderbaugruppe 104 der Zylinder/Kolben-Einheit 102 mit einem radial inneren Verlängerungsabschnitt 110 sich axial über das Drehentkopplungslager 82 hinaus erstreckt und auch den Druckring 68 axial an dessen Innenseite teilweise übergreift. Mit diesem Verlängerungsabschnitt 110 erstreckt sich die Zylinderbaugruppe 104 bis in den axialen Bereich des zweiten Reibelemententrägers 30. Dort übergreift die Zylinderbaugruppe 104 den zweiten Reibelemententräger 30 und ist mit nach radial innen greifenden Kopplungsabschnitten 112 mit diesem fest gekoppelt. Diese können beispielsweise in entsprechende Aussparungen am Außenumfangsbereich des zweiten Reibelemententrägers 30 eingreifen, so dass ein in Achsrichtung und in Umfangsrichtung formschlüssiger Kopplungseingriff zwischen der Zylinderbaugruppe 104 und dem zweiten Reibelemententräger 30 realisiert ist. Da die Betätigungskrafterzeugungsanordnung 100 mit dem zweiten Reibelemententräger 30 zur Rotation verbunden ist, wird auch keine Relativdrehung zwischen der Kolbenbaugruppe 106 und dem Druckring 68 auftreten. Dies bedeutet, dass auf das Vorsehen eines Drehentkopplungslagers 82 verzichtet werden kann und der Druckring 68 direkt an der Kolbenbaugruppe 106 abgestützt sein kann oder mit dieser sogar integral ausgebildet sein kann.

Auf Grund dieser Kopplung zwischen der Zylinderbaugruppe 104 und dem zweiten Reibelemententräger 30 wird die Zylinderbaugruppe 104 und mithin die Zylinder/Kolben-Einheit 102 sich im Einrückzustand der Kopplungsanordnung 10 zusammen mit dem zweiten Reibelemententräger 30 bzw. der Eingangswelle 14 drehen. Dies macht es erforderlich, für das Einspeisen von Druckfluid in die Zylinderkammer 108 eine Drehdurchführung vorzusehen, die in der Fig. 1 jedoch nicht dargestellt ist. Um die Zuführung von Schmierfluid aus dem Schmierfluidkanal 92 zu den beiden Schmierfluidreservoirs 94 und 96 zu ermöglichen, weist der Verlängerungsabschnitt 110 in demjenigen Bereich, in welchem der Schmierfluidkanal 92 nach radial außen offen ist, eine bzw. in Umfangsrichtung verteilt mehrere Öffnungen 114 auf, über welche das aus dem Schmierfluidkanal 92 austretende Schmierfluid zunächst in den Bereich des Schmierfluidreservoirs 94 gelangen kann.

Durch den vorangehend beschriebenen Kopplungseingriff zwischen der Zylinderbaugruppe 104 und dem zweiten Reibelemententräger 30 wird eine axiale Abstützung der Zylinderbaugruppe 104 bezüglich des zweiten Reibelemententrägers 30 realisiert, welche zur Folge hat, dass auch bei Erzeugung von Betätigungkräften, also bei Einleitung von Druckfluid in die Zylinderkammer 108 und entsprechender Belastung des Kraftspeichers 58 die Reaktionskraftabstützung über den Druckring 68, das Drehentkopplungslager 82, die Kolbenbaugruppe 106, die Zylinderbaugruppe 104 und wieder zurück zum zweiten Reibelemententräger 30 verläuft, an welchem der Kraftspeicher 58 in seinem Abstützbereich 60 über das Ringelement 62 ebenfalls abgestützt ist. D.h., auch bei Durchführung von Betätigungsvorgängen zum Ausrücken der Kopplungsanordnung 10 werden keine axialen Kräfte in die Eingangswelle 14 eingeleitet. Dies hat zur Folge, dass in einer Übergangsphase, in welcher von einem Betriebszustand eines die Eingangswelle 14 aufweisenden Kompressors in einen Außerbetriebszustand übergegangen wird und mithin die Eingangswelle 14 noch rotieren wird, auch kurzzeitig bei Rotation der Eingangswelle 14 vorhandene Axialbelastungen der Axiallager der Eingangswelle 14 nicht zu einem Verschleiß führen können.

Im eingerückten Zustand ist auf Grund der konstruktiven Ausgestaltung der erfindungsgemäßen Kopplungsanordnung 10 ohnehin für einen vollständigen Kraftrückschluss innerhalb der Kopplungsanordnung 10 gesorgt, nämlich über die Druckplatte 54, welche am zweiten Reibelemententräger 30 festgelegt bzw. axial abgestützt ist.

Bei der erfindungsgemäßen Kopplungsanordnung 10 ist also dafür gesorgt, dass die im Allgemeinen als Gleitlager bzw. Anlaufscheiben oder dergleichen ausgebildeten Axiallager der Eingangswelle 14 in keiner Betriebsphase durch in der Kopplungsanordnung 10 generierte Betätigungs- bzw. Reaktionskräfte belastet werden.

Bei einer alternativen Ausgestaltungsvariante könnte vorgesehen sein, dass die axiale Abstützung der Zylinderbaugruppe 104 bzw. der Betätigungskrafterzeugungsanordnung 100 am zweiten Reibelemententräger 30 nicht durch die vorangehend beschriebene feste bzw. drehfeste Kopplung erfolgt. Vielmehr könnte zwischen der Zylinderbaugruppe 104 und dem zweiten Reibelemententräger 30 ein diese axial bezüglich einander stützendes Lager, beispielsweise Wälzkörperlager oder Gleitlager, wirken, so dass zwar die Reaktionskräfte in der vorangehend beschriebenen Art und Weise abgestützt werden können, diese beiden Baugruppen Betätigungskrafterzeugungsanordnung 100 und zweiter Reibelemententräger 30 jedoch nicht zwangsweise drehverkoppelt sind. In diesem Falle könnte die Betätigungskrafterzeugungsanordnung 100 dann am Gehäuse 16 festgelegt werden und es könnte auf die vorangehend beschriebene Drehdurchführung verzichtet werden.

## Patentansprüche

1. Kopplungsanordnung zur wahlweisen Drehkopplung einer Eingangswelle, insbesondere eines Kompressors in einem Fahrzeug, mit einem Antriebsorgan, insbesondere Antriebsrad, umfassend:
- einen mit dem Antriebsrad (12) zur gemeinsamen Drehung um eine Drehachse (A) gekoppelten oder zu koppelnden ersten Reibelemententräger (18), mit welchem die Reibelemente (26) einer ersten Gruppe (28) von Reibelementen drehfest gekoppelt sind,
- einen mit der Eingangswelle (14) zur gemeinsamen Drehung um die Drehachse (A) gekoppelten oder zu koppelnden zweiten Reibelemententräger (30), mit welchem die Reibelemente (50) einer zweiten Gruppe (52) von Reibelementen drehfest gekoppelt sind,
- an einer in Richtung von einem freien Ende (34) der Eingangswelle (14) weg weisenden ersten axialen Seite der beiden Gruppen (28, 52) von Reibelementen eine bezüglich des zweiten Reibelemententrägers (30) axial abgestützte Widerlagerplatte (54),
- an einer in Richtung freies Ende (34) der Eingangswelle (14) weisenden zweiten axialen Seite der beiden Gruppen (28, 52) von Reibelementen (26, 50) eine durch einen Kraftspeicher (58) in Richtung auf die Reibelemente (26, 50) zu beaufschlagte Anpressplatte (56),
- eine Betätigungskrafterzeugungsanordnung (100) zur Erzeugung einer Betätigungskraft für den Kraftspeicher (58), wobei die Betätigungskrafterzeugungsanordnung (100) mit dem zweiten Reibelemententräger (30) zur Reaktionskraftabstützung axial gekoppelt ist.

2. Kopplungsanordnung nach Anspruch 1,
**dadurch gekennzeichnet, dass** die Betätigungskrafterzeugungsanordnung (100) eine Zylinder/Kolben-Einheit (102) umfasst, wobei eine Kolbenbaugruppe (106) der Zylinder/Kolben-Einheit (102) über ein Betätigungskraftübertragungsorgan (68) mit dem Kraftspeicher (58) zu dessen Betätigung zusammenwirkt und wobei eine Zylinderbaugruppe (104) der Zylinder/Kolben-Einheit (104) mit dem zweiten Reibelemententräger axial gekoppelt ist.

3. Kopplungsanordnung nach Anspruch 2,
**dadurch gekennzeichnet, dass** die Zylinderbaugruppe (104) mit dem zweiten Reibelemententräger (30) drehfest gekoppelt ist.

4. Kopplungsanordnung nach Anspruch 3,
**dadurch gekennzeichnet, dass** die Kolbenbaugruppe (106) mit dem Betätigungskraftübertragungsorgan (68) ohne Zwischenschaltung eines Drehentkopplungslagers zusammenwirkt.

5. Kopplungsanordnung nach einem der Ansprüche 1 bis 4,
**dadurch gekennzeichnet, dass** der erste Reibelemententräger (18) bezüglich des zweiten Reibelemententrägers (30) axial und radial gelagert ist.

6. Kopplungsanordnung nach einem der Ansprüche 1 bis 5,
**dadurch gekennzeichnet, dass** der Kraftspeicher (58) ringartig ausgebildet ist und in einem radial äußeren Abstützbereich (60) bezüglich des zweiten Reibelemententrägers (30) axial abgestützt ist, in einem radial inneren Betätigungsbereich (66) zur Durchführung von Einrück- und Ausrückvorgängen betätigbar ist und in einem radial zwischen dem Abstützbereich (60) und dem Betätigungsbereich (66) liegenden Beaufschlagungsbereich (64) die Anpressplatte (56) beaufschlagt.

7. Kopplungsanordnung nach Anspruch 2 oder einem der Ansprüche 3 bis 6, sofern auf Anspruch 2 rückbezogen,
**dadurch gekennzeichnet, dass** das Betätigungskraftübertragungsorgan (68) in einem an der ersten axialen Seite der beiden Gruppen (28, 52) von Reibelementen liegenden Bereich zur Durchführung von Betätigungsvorgängen mit der Betätigungskrafterzeugungsanordnung (100) zusammenwirkt und in einem an der zweiten axialen Seite der beiden Gruppen (28, 52) von Reibelementen liegenden Bereich mit dem Kraftspeicher (58) zu dessen Betätigung zusammenwirkt.

8. Kopplungsanordnung nach Anspruch 7,
**dadurch gekennzeichnet, dass** das Betätigungskraftübertragungsorgan (68) mit wenigstens einem Betätigungsabschnitt (72, 74; 84, 86, 88, 90) den zweiten Reibelemententräger axial durchgreift.
